# EUROPEAN PATENT APPLICATION

(11) **EP 4 717 082 A1**
(43) Date of publication of application: **01.04.2026**
(21) Application number: 24202743.1
(22) Date of filing: 26.09.2024
(51) Int. Cl.: A01K 5/02, A01K 11/00, A01K 29/00

(54) **METHOD AND FEEDING SYSTEM FOR GESTATING GILTS AND SOWS**

(71) Applicant: Bopil ApS, 6400 Sønderborg (DK)
(72) Inventor: CLAUSEN, Michael Fussing, 6400 Sønderborg (DK)
(74) Representative: Inspicos P/S

(57) **Abstract**

This disclosure relates to a method for determining feed levels for a gestating gilt or sow. The method comprises: scanning a pig to provide first measurements indicative of a shape of the pig within a first period of time; providing a measured backfat level of the pig indicative of an actual thickness of backfat of the pig within the first period of time; determining a first feed level based at least on the measured backfat level; discharging feed to the pig based on the first feed level; scanning the pig to provide second measurements indicative of a shape of the pig within a second period of time later than the first period of time; comparing the second and first measurements to determine a difference; determining a second feed level based on the measured backfat level and the difference; and discharging feed to the pig based on the second feed level.

## Description

### FIELD OF THE INVENTION

The present invention relates to a method for determining feed levels for a gestating gilt or a gestating sow. The invention further relates to a computer program for providing feeding instructions. Moreover, the invention relates to a feeding system for one or more gestating gilts and/or one or more gestating sows.

### BACKGROUND OF THE INVENTION

In modern livestock farming for the production of pork, the reproductive efficiency of sows and gilts plays a crucial role in ensuring high levels of meat yield. A critical factor in this process is the physical condition of the animals during gestation, specifically the thickness of their backfat. Optimal backfat levels have been associated with improved pregnancy outcomes, higher birth weights of piglets, and an overall increase in the number of live piglets per litter. Thus, maintaining an appropriate backfat thickness during gestation has become a primary focus of farmers and breeding specialists aiming to optimize reproductive success.

Historically, the measurement of backfat thickness has relied on manual methods, which are both labour-intensive and time-consuming. Farmers or veterinarians are required to physically assess the animals at regular intervals, which introduces a number of inefficiencies, particularly for larger operations with hundreds or even thousands of gestating sows. This manual approach not only requires significant human resources but also interrupts the daily routine of the animals, potentially inducing stress that can negatively affect their reproductive health. Furthermore, manual measurements are prone to inconsistencies due to variations in technique, which can impact decision-making about an animal's nutrition and care.

In response to these challenges, several automated systems have been developed in an attempt to streamline the process of monitoring backfat levels. Among these, various image analysis technologies have been attempted, offering a non-invasive means of assessing the physical condition of sows and gilts. However, despite the seeming potential of these systems, they have generally failed to provide consistently accurate readings. As a result, farmers are still generally reliant on manual methods to ensure their animals are within the optimal range, undermining the efficiency that automated systems promised to bring.

It is therefore an objective of the present invention to provide efficient methods and systems for improving the yield of piglets from gestating sows and gilts.

### SUMMARY OF THE INVENTION

On the above background, it is an object of preferred embodiments of the present disclosure to provide efficient methods and systems for improving the yield of piglets from gestating sows and gilts. More specifically, preferred embodiments of the present disclosure aims to offer solutions that can effectively steer the backfat level of these animals towards an optimal range without the need for ongoing, labour-intensive manual measurements, thereby enhancing both accuracy and ease of use in commercial farming operations.

A first aspect of the present disclosure relates to a method for discharging feed for pigs, the method comprising the steps of:
scanning a target pig to provide a first set of scan measurements, the target pig being a gestating gilt or a gestating sow, wherein the first set of scan measurements is indicative of a shape of the target pig within a first period of time;
providing a measured backfat level of the target pig, wherein the measured backfat level is indicative of an actual thickness of backfat of the target pig within the first period of time;
determining a first feed level based at least on the measured backfat level;
discharging feed to the target pig based on the first feed level;
scanning the target pig to provide a second set of scan measurements, wherein the second set of scan measurements is indicative of a shape of the target pig within a second period of time, wherein the second period of time is later than the first period of time;
comparing the second set of scan measurements with the first set of scan measurements to determine a pig shape difference;
determining a second feed level based on the measured backfat level and the pig shape difference; and
discharging feed to the target pig based on the second feed level.

Aspects of the present disclosure combine a measured backfat level, indicative of an actual thickness of the backfat of a target pig, with sets of scan measurements indicative of the shape of the target pig.

A first set of scan measurements and the measured backfat level are respectively indicative of the shape of the pig and the actual thickness of backfat within the same period of time, i.e., the first period of time. Thereby, the shape of the pig within this period can be related to the measured backfat level. This can then serve as a reference starting point for regulating feed to the target pig going forward.

The first set of scan measurements can be compared to the second set of scan measurements to determine a pig shape difference. This pig shape difference is then indicative of a change in the actual backfat level of the target pig. Thereby, an indication of change of the actual backfat level between the first period of time and the second period of time has been obtained without an actual measurement of the backfat level in the second period of time.

As a result, aspects of the present disclosure can be used to monitor the backfat level via the pig shape without necessarily measuring the backfat level directly, upon which the feed provided to the target pig can be controlled to provide, e.g., an optimal yield of piglets.

The feed levels (for example, the first feed level and/or the second feed level) can generally be set to steer the backfat level of the target pig towards a backfat level within a desired target range. By ongoing scanning of the target pig, the shape, and thereby the backfat level, of the target pig can be controlled throughout the entire gestation period to thereby ensure in improved yield, in particular an overall increase in the number of live piglets per litter. This can be achieved without a need for ongoing labour-intensive manual measurements of the actual backfat level. Typically, only an single initial measurement of the actual backfat level is needed. However, further later measurements of the actual backfat level may also be utilized within the scope of the present disclosure.

By utilizing a measured backfat level indicative of an actual thickness of backfat of the target pig, and determining a future feed level based on a combination of this measured backfat level and a pig shape difference, any morphological features of the target pig which arise due to the bone structure and/or the muscle size of that target pig can be, at least partly, neglected. Any conventional systems relying on scan measurements without a measured backfat level are typically not capable of subtracting any effects that bone structure and muscle size may have on the morphological features of the particular pig, and thereby, such conventional systems are not capable of accurately regulating the feed levels.

Moreover, different physiology of pigs can affect the ability of the specific pig digest the feed, and the ability of the specific pig to maintain, build up, or reduce the thickness of a backfat layer. Furthermore, some pigs may be more physically active than others, which increase the amount of feed needed for these pigs. By utilizing a measured backfat level indicative of an actual thickness of backfat of the target pig, and determining a future feed level based on a combination of this measured backfat level and a pig shape difference, any such differences between pigs can be taken into account by regulating the feed accordingly. For example, if a specific target pig needs to increase its backfat thickness, then the feed level for that pig can be increased until the shape of the pig has changed accordingly. As an example, such a procedure is typically superior in comparison with increasing the feed level for that pig for a pre-determined amount of time. Thereby, methods and systems according to the present disclosure are able to ensure that a desired backfat thickness is reached and maintained despite different physiologies and different physical activities of pigs.

In case the backfat thickness fluctuates throughout the gestation, typically a greater amount of feed is required for the pig. In contrast, examples of the present disclosure may ensure that a thickness of backfat is stable throughout greater periods of the gestation, which thereby in turn may ensure that the total amount of feed required for the target pig is reduced.

The measured backfat level indicative of an actual thickness of backfat of the target pig may, for example, be obtained manually via a handheld backfat measurement device. Such devices are typically based on ultrasound to provide a measurement of thickness of backfat of a pig. The measured backfat level may be obtained based on one measurement or based on a plurality of measurements.

Preferably, the first set of scan measurements and second set of scan measurements, or the pig shape difference from which the second feed level is determined, is primarily directed at a back portion of the target pig, preferably a lower back portion of the target pig, since this is the portion of the pig which is primarily changes in shape upon changes in the backfat level. Further the shape of the back portion, particularly the lower back portion, is not strongly affected by the gestation of the pig. Thereby, the shape of this portion may serve well as an indicator of the backfat thickness of the target pig throughout long periods of the gestation.

The first set of scan measurements and the measured backfat level may be obtained in the first period of time. As an example, one scan measurement may be provided each day in a first period of time having a duration of one week to provide a first set of scan measurements, and within this duration, the actual thickness of backfat is also measured. In a second period of time having a duration of one week, the second period of time being later than the first period of time, one scan measurement may again be provided each day to provide a second set of scan measurements. Examples of durations of the first period of time is two weeks, one week, five days, three days, two days, one day, twelve hours, ten hours, eight hours, and six hours. Examples of durations of this the second of time is two weeks, one week, five days, three days, two days, one day, twelve hours, ten hours, eight hours, and six hours. Each measurement of the first set of scan measurements may be performed prior to each measurement of the second set of scan measurements. According to examples of the present disclosure, the first period of time terminates with the last measurement of the first set of scan measurements. According to examples of the present disclosure, the second period of time starts with the first measurement of the second set of scan measurements. s

Generally, scan measurements of the first set of scan measurements and of the second set of scan measurements can be provided in relation to a feeding session of the target pig. The scan measurements may, for example, be provided by a scanning arrangement positioned at a feeding stall of the target pig. Thereby, examples of the present disclosure may ensure that scan measurements are obtained regularly, and/or that scan measurements are obtained while the target pig has a regular positioning relative to the scanning arrangement. As an example, one feeding session or two feeding sessions occurs each day, and one or more scan measurements is provided each day and/or in relation to each of the feeding sessions.

A set of scan measurements may contain one or more scan measurements of the target pig. Multiple scan measurements can ensure that measurement errors due to, e.g., irregular lighting or relative positioning of the target pig are reduced.

Generally, if a measured backfat level is greater than desired, the amount of feed provided to the target pig can be decreased, and if a measured backfat level is smaller than desired, the amount of feed provided to the target pig can be increased. Upon measuring a pig shape difference at a later stage, the amount of feed provided to that target pig can then be changed accordingly.

Alternatively or additionally to changing an amount of feed based on feed levels, a composition of feed can be changed based on the feed levels.

As an alternative to determining the first feed level based on a measured backfat level, the first feed level may be a pre-set feed level.

According to examples of the present disclosure, the first feeding level is determined by comparison of the measured backfat level with one or more reference backfat levels, the one or more reference backfat levels each being respectively associated with one or more reference feed levels.

Thereby, the first feeding level can straightforwardly be based on recommended for levels for specific backfat thickness ranges.

According to examples of the present disclosure, the method comprises a step of determining an estimated backfat level based on the measured backfat level and the pig shape difference, wherein the second feed level is based on the estimated backfat level.

According to examples of the present disclosure, the second feed level is determined by comparison of the estimated backfat level with the one or more reference backfat levels.

By converting the obtained pig shape difference into an estimated backfat level, the second feed level can straightforwardly be based on recommended feed levels for specific backfat thickness ranges.

According to examples of the present disclosure, the second feed level is smaller than the first feed level when the pig shape difference is indicative of pig size increase, and/or
wherein the second feed level is greater than the first feed level when the pig shape difference is indicative of pig size decrease.

In other words, if the pig shape difference indicates that the backfat thickness has increased sufficiently, the feed level may be decreased accordingly, and/or if the pig shape difference indicates that the backfat thickness has decreased sufficiently, the feed level may be increased accordingly.

According to examples of the present disclosure, the second feed level is the same as the first feed level if the pig shape difference is below a pre-set threshold.

In other words, if the pig shape difference indicates that the backfat thickness has not changed sufficiently, then the feed level may remain unchanged. For example, if the backfat thickness has not increased sufficiently, then a feed level can remain high, or if the backfat thickness has not decreased sufficiently, then a feed level can remain low.

According to examples of the present disclosure, the first feed level and/or the second feed level is further based on litter number of the target pig.

According to examples of the present disclosure, the first feed level and/or the second feed level is further based on weight of the target pig.

According to examples of the present disclosure, the first feed level and/or the second feed level is further based on a gestation day of the target pig.

By further adapting feed levels according to litter number, weight, gestation day of the pig, or a combination thereof, the feed levels can be further improved with respect to the target pig.

The gestation day is determined relative to the insemination day.

According to examples of the present disclosure, the method comprises the steps of:
analysing the first set of scan measurements to determine a first value of a pig body parameter of the target pig; and
analysing the second set of scan measurements to determine a second value of the pig body parameter of the target pig;
wherein the step of comparing the first set of scan measurements and the second set of scan measurements comprises comparing the first value and the second value.

A pig body parameter may, for example, relate to a geometry of the pig, preferably a geometry of the back of the pick. As examples, the sow geometry may relate to a transversal/lateral width of the pig, a curvature of a portion of the bag, an estimated volume of the pig, or a combination thereof.

As an example, a polynomial with a single variable can be fitted to a back portion of the target pig, the single variable corresponding to the transversal/lateral direction of the pig. The pig body parameter can then be based on a coefficient of the fitted polynomial. For example, the fitted polynomial can be a second-degree polynomial where the coefficient of the squared variable is used as or as basis for the pig body parameter.

As another example, a polynomial with two variables can be fitted to a back portion of the target pig, the two variables corresponding to the transversal/lateral direction and the longitudinal/axial direction of the pig. The pig body parameter can then be based on a coefficient of the fitted polynomial.

Further, other approaches may also be used to analyse the shape of the target pig. For example, the step of comparing the second set of scan measurements with the first set of scan measurements, and/or the steps of analysing the first set of scan measurements and analysing the second set of scan measurements may be performed based on a machine-learning model trained to analyse scan measurements of pigs to derive a value of the pig body parameter, and/or trained to analyse scan measurements of pigs to determine the pig shape difference.

According to examples of the present disclosure, said pig shape difference is a first pig shape difference,
wherein the method further comprises the steps of:
scanning the target pig to provide a third set of scan measurements, wherein the third set of scan measurements is indicative of a shape of the target pig within a third period of time, wherein the third period of time is later than the second period of time;
comparing the third set of scan measurements with the first set of scan measurements and/or with the second set of scan measurements to determine a second pig shape difference;
determining a third feed level based on the measured backfat level and the second pig shape difference; and
discharging feed to the target pig based on the third feed level.

Thus, for example, scan measurements may be acquired regularly, for example throughout most of the gestation period of the pig, upon which feed levels are determined and feed is discharged.

According to examples of the present disclosure, said measured backfat level is a first measured backfat level, wherein the method further comprises the steps of:
providing a second measured backfat level of the target pig, wherein the second measured backfat level is indicative of an actual thickness of backfat of the target pig in a period later than the first period of time;
determining a later feed level based at least on the second backfat level; and
discharging feed to the target pig based on the later feed level.

Thus, during the gestation period of the pig, an additional measurement of the actual thickness of the backfat of the target pig may be acquired, upon which a later feed level is based. For example, a measurement of the backfat level can be performed initially in the gestation period, and a second measurement can be performed halfway in the period, or upon detection of a pig-shape difference greater than a threshold, for example a threshold based on the initially measured first backfat level.

Thereby, even though the present disclosure provides an approach for determining an estimated backfat level based on the pig shape difference, a measurement of the actual backfat level may be used as supplement to further improve accuracy.

According to examples of the present disclosure, the steps of the method are applied to feed a plurality of gestating gilts and/or gestating sows, wherein the first set of scan measurements, the second set of scan measurements, and the measured backfat level are each obtained separately for individual pigs of the plurality of gestating gilts and/or gestating sows to thereby discharge feed to a given pig based on the first set of scan measurements, the second set of scan measurements, and the measured backfat level of that pig.

Hence, the method can be applied to a plurality of individual gestating gilts and/or gestating sows, each having a unique morphology, actual backfat thickness, physiology, and physical activity. Accordingly, the method can generally improve efficiency in modern livestock farming operations having a plurality of gestating gilts and/or sows.

According to examples of the present disclosure, the method further comprises a step of identifying the target pig, wherein any of the steps of:
scanning the target pig to provide the first set of scan measurements;
discharging feed to the target pig based on the first feed level;
scanning the target pig to provide the second set of scan measurements; and
discharging feed to the target pig based on the second feed level;
are based on the step of identifying the target pig.

Identification of the target pig may ensure that feed is supplied or discharged to the correct pig. This may in particular be relevant in case examples in which aspects of the present disclosure are applied to feed a plurality of pigs, for example a plurality of gestating gilts and/or gestating sows.

According to examples of the present disclosure, the step of identifying the target pig is based on any of:
an RFID of the target pig;
a weight of the target pig;
image recognition of the target pig;
a location of the target pig; and
any combination thereof.

According to examples of the present disclosure, measurements of the first set of scan measurements and/or of the second set of scan measurements are obtained in relation to one or more feeding sessions of the target pig; and/or wherein the step of identifying the target pig is performed in relation to the one or more feeding sessions of the target pig.

Such a feeding session may take place in a feeding stall. As an example, the target pig is identified to permit entrance of the target pig into the feeding stall. As another example, the target pig is identified to initiate discharging of the feed. As an example, feed is discharged based on acquiring a scan measurement of the pig.

Thereby, aspects of the present disclosure can be integrated into feeding routines, hence ensuring that the pigs are fed as intended and/or that scan measurements are acquired as desired.

A second aspect of the present disclosure relates to a computer program comprising instruction which, when the program is executed by a computer, cause the computer to carry out the steps of:
receiving a first set of scan measurements of a target pig, wherein the first set of scan measurements is indicative of a shape of the target pig within a first period of time;
receiving a measured backfat level of the target pig, wherein the measured backfat level is indicative of an actual thickness of backfat of the target pig within the first period of time;
determining a first feed level based at least on the measured backfat level;
providing feeding instructions based on the first feed level;
receiving a second set of scan measurements of the target pig, wherein the second set of scan measurements is indicative of a shape of the target pig within a second period of time, wherein the second period of time is later than the first period of time;
comparing the second set of scan measurements with the first set of scan measurements to determine a pig shape difference;
determining a second feed level based on the measured backfat level and the pig shape difference; and
providing feeding instructions based on the second feed level.

The step providing feeding instructions based on the first feed level may be a step of providing feeding instructions to a feeding arrangement based the first feed level; and/or the step providing feeding instructions based on the second feed level may be a step of providing feeding instructions to a/the feeding arrangement based the second feed level. The feeding arrangement may be configured to discharge feed based in the feeding instructions.

Any effects or advantages of the method according to the first aspect may also be provided by a computer program according to the second aspect.

According to examples of the present disclosure, the computer program according to the second aspect is configured to perform the method according to the first aspect.

A third aspect of the present disclosure relates to a feeding system for one or more gestating gilts and/or one or more gestating sows, the feeding system comprising:
a scanning arrangement configured to scan a target pig to provide a first set of scan measurements and a second set of scan measurements of the target pig;
a digital processing arrangement configured to receive the first set of scan measurements and the second set of scan measurements; and
a feeding arrangement configured to discharge feed for the target pig based on instructions from the digital processing arrangement;
wherein the digital processing arrangement is configured to:
receive the first set of scan measurements, wherein the first set of scan measurements is indicative of a shape of the target pig within a first period of time;
receive a measured backfat level of the target pig, wherein the measured backfat level is indicative of an actual thickness of backfat of the target pig within the first period of time;
determine a first feed level based at least on the measured backfat level;
instruct the feeding arrangement to discharge feed based on the first feed level;
receive the second set of scan measurements, wherein the second set of scan measurements is indicative of a shape of the target pig within a second period of time, wherein the second period of time is later than the first period of time;
compare the second set of scan measurements with the first set of scan measurements to determine a pig shape difference;
determining a second feed level based on the measured backfat level and the pig shape difference; and
instruct the feeding arrangement to discharge feed based on the second feed level.

Any effects or advantages of the method according to the first aspect may also be provided by a feeding system according to the third aspect.

The digital processing arrangement may, for example, be a computer system. The digital processing arrangement may comprise one or more processing units (such as CPUs) and on or more digital storages. Such digital storages may store the computer program, such as the computer program according to the second aspect. Such digital storages may further be arranged to receive and store data, such as scan measurements and measured backfat levels. Accordingly, the digital processing arrangement may be communicatively coupled with other relevant components of the system, such as the scanning arrangement and the feeding arrangement. Moreover, the digital processing arrangement may be configured to receive manual input, such as the measured backfat level, and/or display information to an operator of the system, such as data indicative of the pig shape difference.

According to examples of the present disclosure, the system further comprises a backfat measurement device for providing the measured backfat level of the target pig.

A backfat measurement device may be a handheld device. The backfat measurement device may perform a measurement based on ultrasound. The backfat measurement device may preferably measure the total backfat level indicative of a combined thickness of all layers of backfat of the target pig.

According to examples of the present disclosure, the backfat measurement device is communicatively coupled with the digital processing arrangement for automatically transmitted the measured backfat level from the backfat measurement device to the digital processing arrangement.

Thereby, the combined system can efficiently ensure that the measured backfat level of the target pig is provided to the digital processing arrangement.

The backfat measurement device may further have an integrated identification determination means, such as an RFID scanner, such that the measured backfat level can efficiently be associated with the relevant pig.

According to examples of the present disclosure, the scanning arrangement is a 3D scanning arrangement configured to collect three-dimensional data indicative of a shape of the target pig.

According to examples of the present disclosure, the feeding system according to the third aspect is configured to perform the method according to the first aspect.

### BRIEF DESCRIPTION OF THE DRAWINGS

Embodiments of the invention will now be further described by reference to the accompanying drawings, in which:
Fig. 1 illustrates a feeding system according to examples of the present disclosure,
Fig. 2 illustrates a computer program according to examples of the present disclosure,
Fig. 3 illustrates method steps according to examples of the present disclosure,
Fig. 4 illustrates exemplary scan measurements comprising three-dimensional data indicative of a shape of a pig,
Fig. 5 illustrates an example of a fit to a scan measurement,
Fig. 6 illustrates a correlation between a measured backfat level and an estimated backfat level according to examples of the present disclosure, and
Fig. 7 illustrates an example of a table which provides various reference feed levels for various respective reference backfat levels.

### DETAILED DESCRIPTION

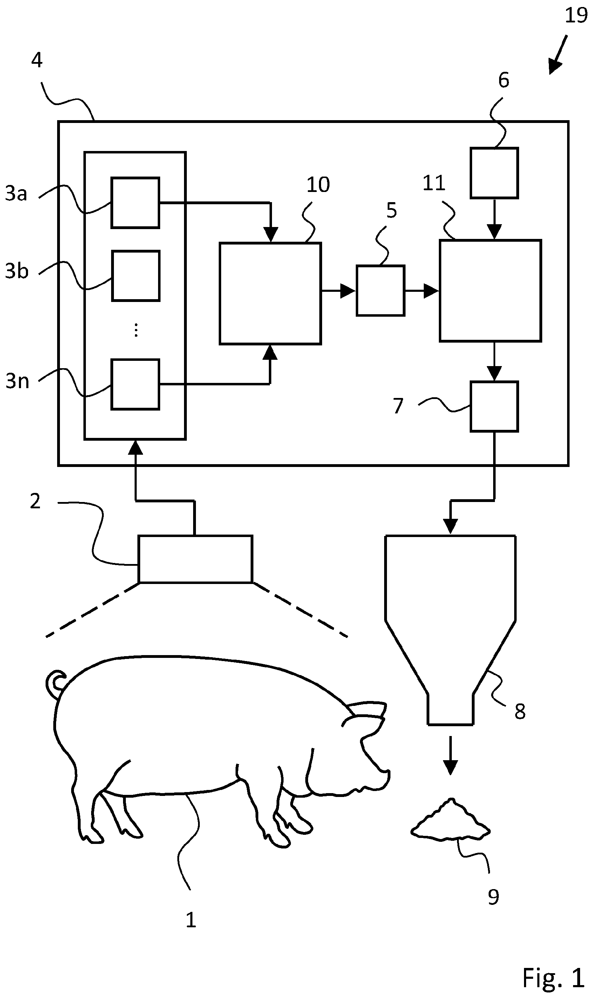

Fig. 1 illustrates a feeding system 19 according to examples of the present disclosure. The feeding system is configured to feed one or more gestating gilts and/or one or more gestating sows. In the present illustration, a gestating gilt or sow 1 is illustrated. This gestating gilt or sow 1 is considered as a target pig in the present example.

The system 19 comprises a scanning arrangement 2 configured to scan the target pig 1 to provide scan measurements 3a, 3b, ... 3n. The scanning arrangement 2 can, for example, be a laser-based scanner, or a camera, such as a range camera or a stereo camera. Thereby, the scan measurements 3a, 3b, ... 3n are indicative of a shape of the target pig 1.

The scanning arrangement is arranged at a feeding stall of the target pig 1. Thereby, the scanning arrangement can acquire a scan measurement of the target pig 1 in relation to feeding the pig.

The feeding system 19 further comprises a digital processing arrangement 4. The scan measurements 3a, 3b, ... 3n obtained by the scanning arrangement 2 are sent to the digital processing arrangement, which in turn is configured to receive and process these scan measurements 3a, 3b, ... 3n. The digital processing arrangement is operated according to a computer program.

The processing arrangement 4 is further configured to receive a measured backfat level 6 of the target pig 1. This measured backfat level 6 may, for example, be measured and/or provided to the processing arrangement 4 by a human operator of the system. This backfat level 6 is indicative of an actual thickness of backfat of the target pig 1.

Moreover, the feeding system 19 comprises a feeding a feeding arrangement 8 configured to discharge feed 9 for the target pig 1 based on instructions from the digital processing arrangement 4.

A general purpose of the system 19 is to discharge feed 9 to the target pig 1 based on the scan measurements 3a, 3b, ... 3n obtained by the scanning arrangement 2, and based on the measured backfat level 6. More specifically, the digital processing arrangement 4 determines a feed level 7 on an ongoing basis, for example each time the target pig 1 is to be fed, and then instructs the feeding arrangement 8 to discharge feed 9 based on the determined feed level 7.

In a first period of time, such as in a first period of gestation of the target pig, a measurement of the actual thickness of backfat of the target pig 1 is performed and the acquired result is provided to the digital processing arrangement 4 as the measured backfat level 6. In this first period of time, at least one scan measurement of the target pig 1 is also acquired.

After the measured backfat level 6 is provided to the digital processing arrangement 4, the processing arrangement determines a first feed level 7 based on this backfat level.

Preferably, if the backfat level 6 is greater than desired, the feed level 7 is determined to be a low value, and a smaller amount of feed 9 is discharged. Correspondingly, if the backfat level is smaller than desired, the feed level 7 is determined to be a high value, and a greater amount of feed 9 is discharged.

In a second period of time after than the first period of time, such as in a second period of the gestation of the target pig 1, another scan measurement of the target pig 1 is acquired. The scan measurement 3a from the first period of time then constitutes a first set of scan measurements, and the scan measurement 3n from the second period of time then constitutes a second set of scan measurements.

When the second set of scan measurements 3n have been acquired, future feed levels can be determined based on this set of scan measurements. The second set of scan measurements 3n is compared with the first set of scan measurements 3a in a scan measurement comparator 10 of the digital processing arrangement 4. This comparator 10 digitally compares scan measurements of the second set of scan measurements with scan measurements of the first set of scan measurements. The comparator 10 may, alternatively or additionally, also compare parameters or values derived from the scan measurements, such as one or more curvatures of the target pig 1. The scan measurement comparator 10 then outputs a pig shape difference 5 based on the comparison. This pig shape difference 5 can, for example, be a set of parameters (one or more parameters) indicative of a difference between the shape of the pig in the second period of time and the shape of the pig in the first period of time. The pig shape difference 5 can also be indicative that there is no difference in the shape of the target pig 1 between the second and first sets of scan measurements.

Based on the pig shape difference 5 and the measured backfat level 6, a second feed level 7 can be determined by a feed level determiner 11. In the present example, the feed level determiner 11 determines the second feed level based on the first feed level, the first feed level in turn being based on the measured backfat level 6. If the pig shape difference 5 indicates that the backfat thickness of the target pig 1 has increased, then the second feed level is reduced relative to the first feed level, and, correspondingly, if the pig shape difference 5 indicates that the backfat thickness of the target pig 1 has decreased, then the second feed level is increased relative to the first feed level.

When the second feed level 7 has been determined, the digital processing arrangement 4 instructs the feeding arrangement 8 to discharge feed 9 to the target pig 1 based on this second feed level 7.

The present example was described in relation to a single gestating gilt or sow 1, but the system may also be configured to provide feed for several of such animals. In such cases, the feeding and measurement process described above is performed individually for each of the pigs. In such cases, the feeding system 19 may further comprise identification determination means, such as an RFID scanner. Thereby, once a pig has been identified, feed can be discharged to the pig based on scan measurements and measured backfat level of that pig.

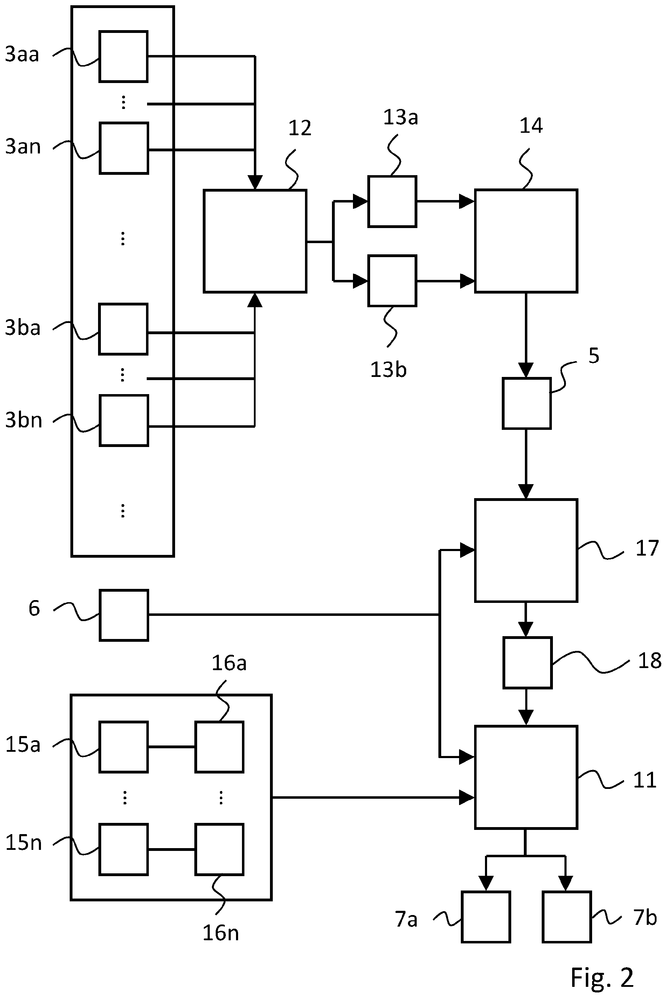

Fig. 2 illustrates a computer program according to examples of the present disclosure. The computer program can be implemented in a digital processing arrangement of a feeding system as the one described in relation to Fig. 1.

In comparison with the example described in relation to Fig. 1, the computer program described in relation to Fig. 2 comprises further features.

The computer program comprises a pig body parameter determiner 12 configured to analyse sets of scan measurements to determine a value of a pig body parameter. Thus, this pig body parameter determiner 12 is configured to analyse a first set of scan measurements 3aa, ... 3an to provide a first value of the pig body parameter 13a, and to analyse a second set of scan measurements 3ba, ... 3bn to provide a second value of the pig body parameter 13b.

The computer program further comprises a pig body parameter comparator 14 configured to compare values of the pig body parameter to determine a pig shape difference 5.

In addition, the computer program comprises a backfat level estimator configured to provide an estimated backfat level 18 based on the measured backfat level 6 and the pig shape difference 5. For example, if the pig shape difference 5 indicates that the pig has grown in size/shape, which in turn indicates that the thickness of backfat has increased, then the backfat level estimator 17 provides an estimated backfat level 18 which is greater than the measured backfat level 6, and, correspondingly, if the pig shape difference 5 indicates that the pig has shrunk in size/shape, which in turn indicates that the thickness of backfat has decreased, then the backfat level estimator 17 provides an estimated backfat level 18 which is smaller than the measured backfat level 6.

The computer program also comprises a feed level determiner 11 configured to provide feed levels 7a, 7b based on a measured backfat level or based on an estimated backfat level. The feed level determiner 11 determines the feed level by comparing the measured or estimated backfat level with reference backfat levels 15a, ... 15n, each associated with a respective reference feed level 16a, ... 16n.

By comparing the measured or estimated backfat level with these reference backfat levels 15a, ... 15n, the reference backfat level corresponding to the measured or estimated backfat level can be identified, and the respective feed level associated with the identified reference backfat level can then be used as feed level output by the feed level determiner 11.

Prior to obtaining a second set of scan measurements 3ba, ... 3bn, no estimated backfat level 18 is determined, and the measured backfat level 6 is then used to determine a feed level, i.e., the first feed level 7a. When a second set of scan measurements 3ba, ... 3bn has been acquired, an estimated backfat level is determined and used to determine a feed level, i.e., the second feed level 7b.

In this example, reference backfat levels 15a, ... 15n, respectively associated with reference feed level 16a, ... 16n is thereby used to determine feed levels via a lookup table operation. In other examples, feed levels may further be based on, e.g., litter number and/or gestation day of the target pig. In such examples, determination of feed levels can also be determined based on one or more lookup tables or the like, which, e.g., index reference feed levels according to litter number, gestation day, and backfat thickness. However, note that other types of operations for determining a feed level can also be employed, for example based on mathematical functions, or more complex models, such as machine learning models.

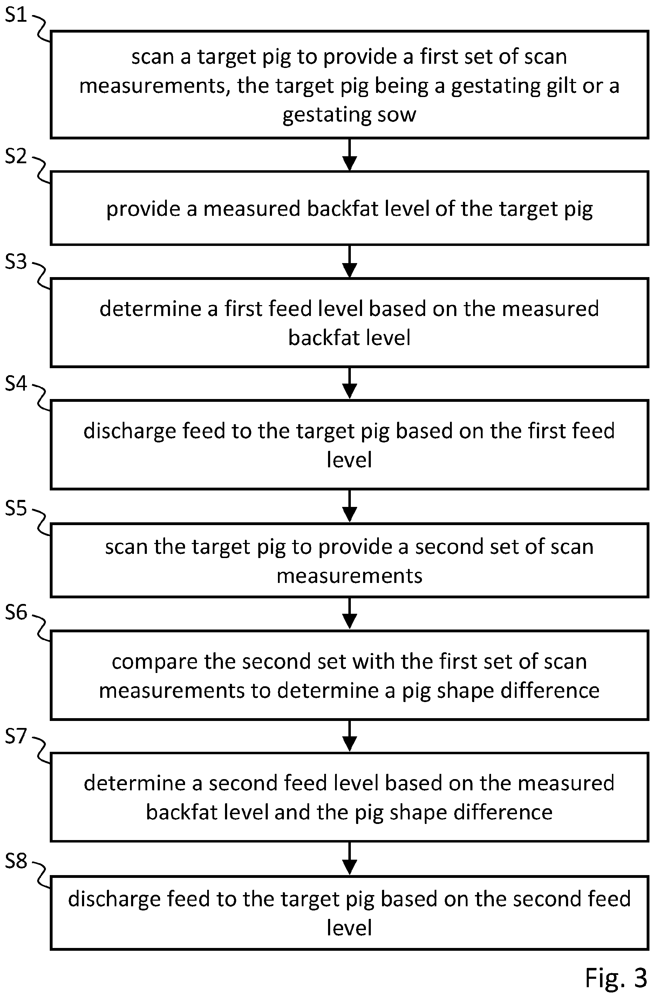

Fig. 3 illustrates method steps S1-S8 according to examples of the present disclosure. The method is a method for discharging feed for pigs.

In a step S1 of the method, a target pig is scanned to provide a first set of scan measurements. The target pig is a gestating gilt or a gestating sow. This first set of scan measurements is indicative of a shape of the target pig within a first period of time. For example, these scan measurements have been obtained within the first period of time.

In another step S2 of the method, a measured backfat level of the target pig is provided. This measured backfat level is indicative of an actual thickness of backfat of the target pig within the first period of time. For example, the measured backfat level have been acquired within the first period of time. The measured backfat level can be obtained before obtaining any scan measurements of the first set of scan measurements.

In another step S3 of the method, a first feed level is determined based at least on the measured backfat level. In some examples, the first feed level is determined based on the measured backfat level without taking any scan measurements of the target pig into account. In other examples, the first feed level is determined based on the measured backfat level while also taking scan measurements, such as the first set of scan measurements, into accou nt.

In another step S4 of the method, feed is discharged to the target pig based on the first feed level.

In another step S5 of the method, the target pig is scanned to provide a second set of scan measurements. This second set of scan measurements is indicative of a shape of the target pig within a second period of time later than the first period of time.

In another step S6 of the method, the second set of scan measurements is compared with the first set of scan measurements to determine a pig shape difference.

In another step S7 of the method, a second feed level is determined based on the measured backfat level and the pig shape difference.

In another step S8 of the method, feed is discharged to the target pig based on the second feed level.

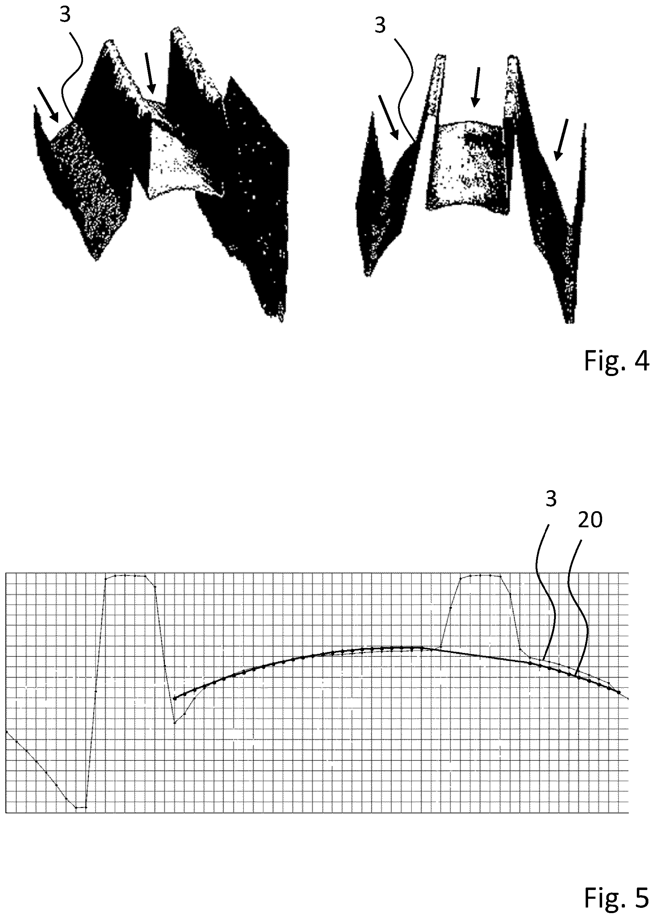

Fig. 4 illustrates exemplary scan measurements 3 comprising three-dimensional data indicative of a shape of a pig.

The two subfigures illustrate the same type of data from different viewing angles.

In each of the sub-figures, the shape of a back portion of a pig is visible, indicated by arrows. However, the data is obscured by the presence of various objects arranged at the feeding stall, such as two rods extending along the longitudinal direction of the pig between the pig and the scanning arrangement which has acquired the scan measurements.

Based on the types of measurements exemplified in Fig. 4, first and second sets of scan measurements can be compared to determine a pig shape difference.

Fig. 5 illustrates an example of a fit to a scan measurement 3. The shown data of the scan measurement 3 corresponds to a scan along a transversal direction of the pig, which in turn corresponds to a line of data points (along the transversal direction) of a scan measurement comprising three-dimensional data such as those illustrated in Fig. 4.

As in Fig. 4, two rods extending along the longitudinal direction of the pig is present in the data. Sections of data comprising such measurement artefacts can be omitted from further data processing steps, such as fitting.

Fig. 5 also illustrates an example of a fitted curve 20, which has been fitted to the scan measurement illustrated in Fig. 5. In the present example, a second-degree polynomial is used as fit. The portion of the scan measurement 3 which has been omitted from the fit is indicated by a lack of data points from the fitted curve 20 at this portion.

In case a scan measurement along the transversal direction of the pig is utilized as exemplified here, such a measurement can preferably be based on measuring at the same portion of the back (relative to the longitudinal direction) each time a scan measurement is obtained. One simple approach to realize this is to position the scanning arrangement at a particular position relative to a feeding arrangement. Since a pig has a tendency to position itself at a particular position relative to the feeding arrangement, an obtained scan measurement will typically be directed at the same or a similar portion of the back of the pig. Alternatively or additionally, image or data analysis can be applied to the scan data to ensure locate a particular portion of the back of the pig. However, since pigs approximately have a cylindrical shape, at least along a portion of the back, accuracy along the longitudinal direction is typically not necessary to provide scan measurements of sufficient quality.

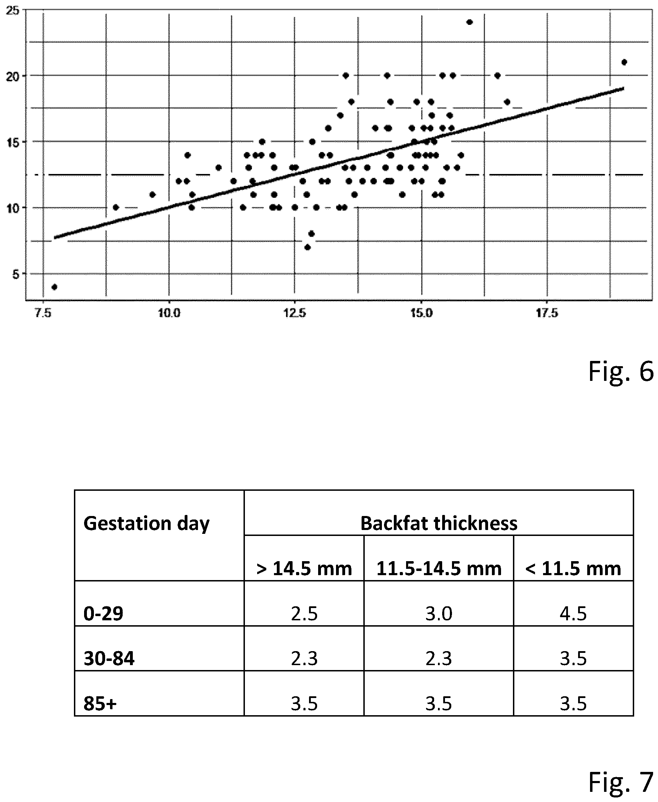

Fig. 6 illustrates a correlation between a measured backfat level and an estimated backfat level according to examples of the present disclosure.

Based on processing a scan measurement, for example by fitting a curve as exemplified in Fig. 5, it is possible to arrive at a feed level, for example by determining whether a curvature of the pig has changed in comparison to previous measurements, and/or by determining an estimated backfat level.

The presence of a correlation between a conventionally measured backfat level, indicative of an actual thickness of backfat of the target pig, and an estimated backfat level determined via scan measurements supports the notion that examples according to the present disclosure permit feeding of gestating gilts and/or gestating sows based on feed levels having an improved accuracy.

Each of the data points in Fig. 6 correspond to a gestating gilt or sow. For each pig, an initially measured backfat level has been provided, and scan measurements have been regularly obtained throughout a period of time. At the end of this period, an estimated backfat level is determined based on the initially measured backfat level and the scan measurements. This estimated backfat level is then compared to a second measured backfat level of the pig obtained at the end of the period. Fig. 6 plots the correlation between the estimated backfat level on the horizontal axis and the second measured backfat level on the vertical axis along with a linear fit.

Evidently, the estimated backfat level and the second measured backfat level are correlated. Accordingly, a meaningful indication of backfat level and/or a change of backfat level can thereby be obtained based on scan measurements in combination with an initially obtained measured backfat level.

In practice, the estimated backfat level illustrated in Fig. 6 is obtained by performing fits to scan measurements as exemplified in relation to Fig. 5. The change in fitting coefficients between different scan measurements can then be used as an indication of a change of backfat level between these scan measurements. For example, in the case of a polynomial fit, a change in the curvature of the fitted curve can be used as an indication of a change of backfat level. For example, an increase of the curvature from the first set of scan measurements to the second set of scan measurements indicates a decrease of thickness of backfat, and a decrease of the curvature from the first set of scan measurements to the second set of scan measurements indicates an increase of thickness of backfat. Such a relation between change in curvature and backfat level can be assumed to be linear or nonlinear. Other parameters of the gestating gilt or sow can also be included. For example, the litter number n can be included in a determination of the estimated of the backfat level by multiplication of a factor of (1 - n×c), where c is a coefficient which indicates the influence of litter number to backfat level, since the back of pigs tend to become flatter with increasing litter number. The coefficient c may for example be in a range from 0.01 to 0.1, for example in a range from 0.02 to 0.08, for example 0.04.

In the following, various examples of relevance to feeding of gestating gilts or sows are provided.

Feeding of gestating gilts and/or a gestating sows can, for example, be performed according to feed units or according to feed weight.

An example of an appropriate feed unit is 'FUsow', which is used in, e.g., Denmark to quantify feed for pigs. This feed unit is based on the physiological energy value of nutrients on and the digestibility of these nutrients. One kg of typical diet for a gestating sow corresponds to approximately 0.99 FUsow. Digestible raw protein provides approximately 1.3 FUsow per kg, digestible carbohydrates provide approximately 1.5 FUsow per kg, and digestibly raw fat provides approximately 4.1 FUsow per kg.

As an approximate guideline, a sow having a weigh of 150 kg requires 1.5 FUsow per day to maintain its weight, with 0.2 FUsow additional per day per 25 kg the sow grows. A sow having a weight of 250 kg thus requires 2.3 FUsow per day to maintain its weight.

Fig. 7 illustrates an example of a table which provides various reference feed levels for various respective reference backfat levels. Further, difference feed levels are provided depending on the gestation day. The gestation day is determined relative to the insemination day. The feed levels are provided in units of FUsow.

As an estimate, additional feed corresponding to 20-25 FUsow is required to provide an additional millimetre of backfat thickness. Thus, in case an increase in backfat thickness of 2 millimetres is required, additional feed corresponding to 40-50 FUsow may be provided to the target pig over a duration of, e.g., 4 weeks.

As an example of an implementation of the method according to the present disclosure, the backfat thickness of a target pig is measured to provide a measured backfat level of the target pig which is 16 mm. This measurement is performed within the first week of gestation, where a first set of scan measurements are also provided. Since the measured backfat thickness is greater than 14.5 mm the pig is fed with feed corresponding to 2.5 FUsow per day based on the table of Fig. 7. Within the weeks after the first, further scan measurements are acquired. A set of these further (second) scan measurements are compared to the first set of scan measurements to determine a pig shape difference of the target pig. If the pig shape difference is sufficiently small, indicating that the backfat thickness is greater than 14.5 mm, the pig will continue to receive feed corresponding to 2.5 FUsow. If the pig shape difference indicates that the backfat thickness has decreased, then the pig will receive feed corresponding to 3.0 FUsow, thereby ensuring that the backfat thickness will not decrease further. These numbers assume that the feeding takes place within days 0-29 of insemination. At later stages, the numbers can be different, see Fig. 7.

Examples according to the present disclosure may thus be implemented based on feed levels in units of FEsow. However, examples of the present disclosure are not restricted to providing feed levels according to such units. For example, feed can also be provided according to weight, for example in units of kg of a particular feed type.

As an example, the feed level is set to 3.2 kg of feed in case the measured backfat level of the pig corresponds to a thickness of 11 mm or less, the feed level is set to 1.6 kg of feed in case the measured backfat level of the pig corresponds to a thickness of 18 mm or more, and, in case the measured backfat level of the pig corresponds to a value between 11 mm and 18 mm, the feed level is set to a weight of feed which is obtained by comparison of the measured backfat level with a linear interpolation (as a function of thickness) between 1.6 kg of feed at 11 mm and 3.2 kg of feed at 18 mm.

### List of figure references:

- 1: gestating gilt or sow
- 2: scanning arrangement
- 3: scan measurement
- 4: digital processing arrangement
- 5: pig shape difference
- 6: measured backfat level
- 7: feed level
- 8: feeding arrangement
- 9: feed
- 10: scan measurement comparator
- 11: feed level determiner
- 12: pig body parameter determiner
- 13: value of pig body parameter
- 14: pig body parameter comparator
- 15: reference backfat level
- 16: reference feed level
- 17: backfat level estimator
- 18: estimated backfat level
- 19: feeding system
- 20: fitted curve

- S1-S8: method steps

## Claims

1. A method for discharging feed for pigs, the method comprising the steps of:
scanning a target pig to provide a first set of scan measurements, the target pig being a gestating gilt or a gestating sow, wherein the first set of scan measurements is indicative of a shape of the target pig within a first period of time;
providing a measured backfat level of the target pig, wherein the measured backfat level is indicative of an actual thickness of backfat of the target pig within the first period of time;
determining a first feed level based at least on the measured backfat level;
discharging feed to the target pig based on the first feed level;
scanning the target pig to provide a second set of scan measurements, wherein the second set of scan measurements is indicative of a shape of the target pig within a second period of time, wherein the second period of time is later than the first period of time;
comparing the second set of scan measurements with the first set of scan measurements to determine a pig shape difference;
determining a second feed level based on the measured backfat level and the pig shape difference; and
discharging feed to the target pig based on the second feed level.

2. A method according to claim 1, wherein the first feeding level is determined by comparison of the measured backfat level with one or more reference backfat levels, the one or more reference backfat levels each being respectively associated with one or more reference feed levels.

3. A method according to any of the preceding claims, wherein the second feed level is smaller than the first feed level when the pig shape difference is indicative of pig size increase, and/or
wherein the second feed level is greater than the first feed level when the pig shape difference is indicative of pig size decrease.

4. A method according to any of the preceding claims, wherein the first feed level and/or the second feed level is further based on litter number of the target pig.

5. A method according to any of the preceding claims, wherein the first feed level and/or the second feed level is further based on weight of the target pig.

6. A method according to any of the preceding claims, wherein the method comprises the steps of:
analysing the first set of scan measurements to determine a first value of a pig body parameter of the target pig; and
analysing the second set of scan measurements to determine a second value of the pig body parameter of the target pig;
wherein the step of comparing the first set of scan measurements and the second set of scan measurements comprises comparing the first value and the second value.

7. A method according to any of the preceding claims, wherein said pig shape difference is a first pig shape difference,
wherein the method further comprises the steps of:
scanning the target pig to provide a third set of scan measurements, wherein the third set of scan measurements is indicative of a shape of the target pig within a third period of time, wherein the third period of time is later than the second period of time;
comparing the third set of scan measurements with the first set of scan measurements and/or with the second set of scan measurements to determine a second pig shape difference;
determining a third feed level based on the measured backfat level and the second pig shape difference; and
discharging feed to the target pig based on the third feed level.

8. A method according to any of the preceding claims, wherein said measured backfat level is a first measured backfat level,
wherein the method further comprises the steps of:
providing a second measured backfat level of the target pig, wherein the second measured backfat level is indicative of an actual thickness of backfat of the target pig in a period later than the first period of time;
determining a later feed level based at least on the second backfat level; and
discharging feed to the target pig based on the later feed level.

9. A method according to any of the preceding claims, wherein the steps of the method are applied to feed a plurality of gestating gilts and/or gestating sows, wherein the first set of scan measurements, the second set of scan measurements, and the measured backfat level are each obtained separately for individual pigs of the plurality of gestating gilts and/or gestating sows to thereby discharge feed to a given pig based on the first set of scan measurements, the second set of scan measurements, and the measured backfat level of that pig.

10. A method according to any of the preceding claims, wherein the method further comprises a step of identifying the target pig, wherein any of the steps of:
scanning the target pig to provide the first set of scan measurements;
discharging feed to the target pig based on the first feed level;
scanning the target pig to provide the second set of scan measurements; and
discharging feed to the target pig based on the second feed level;
are based on the step of identifying the target pig.

11. A method according to any of the preceding claims, wherein the step of identifying the target pig is based on any of:
an RFID of the target pig;
a weight of the target pig;
image recognition of the target pig;
a location of the target pig; and
any combination thereof.

12. A method according to any of the preceding claims, wherein measurements of the first set of scan measurements and/or of the second set of scan measurements are obtained in relation to one or more feeding sessions of the target pig; and/or wherein the step of identifying the target pig is performed in relation to the one or more feeding sessions of the target pig.

13. A computer program comprising instruction which, when the program is executed by a computer, cause the computer to carry out the steps of:
receiving a first set of scan measurements of a target pig, wherein the first set of scan measurements is indicative of a shape of the target pig within a first period of time;
receiving a measured backfat level of the target pig, wherein the measured backfat level is indicative of an actual thickness of backfat of the target pig within the first period of time;
determining a first feed level based at least on the measured backfat level;
providing feeding instructions based on the first feed level;
receiving a second set of scan measurements of the target pig, wherein the second set of scan measurements is indicative of a shape of the target pig within a second period of time, wherein the second period of time is later than the first period of time;
comparing the second set of scan measurements with the first set of scan measurements to determine a pig shape difference;
determining a second feed level based on the measured backfat level and the pig shape difference; and
providing feeding instructions based on the second feed level.

14. A feeding system for one or more gestating gilts and/or one or more gestating sows, the feeding system comprising:
a scanning arrangement configured to scan a target pig to provide a first set of scan measurements and a second set of scan measurements of the target pig;
a digital processing arrangement configured to receive the first set of scan measurements and the second set of scan measurements; and
a feeding arrangement configured to discharge feed for the target pig based on instructions from the digital processing arrangement;
wherein the digital processing arrangement is configured to:
receive the first set of scan measurements, wherein the first set of scan measurements is indicative of a shape of the target pig within a first period of time;
receive a measured backfat level of the target pig, wherein the measured backfat level is indicative of an actual thickness of backfat of the target pig within the first period of time;
determine a first feed level based at least on the measured backfat level;
instruct the feeding arrangement to discharge feed based on the first feed level;
receive the second set of scan measurements, wherein the second set of scan measurements is indicative of a shape of the target pig within a second period of time, wherein the second period of time is later than the first period of time;
compare the second set of scan measurements with the first set of scan measurements to determine a pig shape difference;
determining a second feed level based on the measured backfat level and the pig shape difference; and
instruct the feeding arrangement to discharge feed based on the second feed level.

15. The feeding system according to claim 14, wherein the scanning arrangement is a 3D scanning arrangement configured to collect three-dimensional data indicative of a shape of the target pig.
